(19) Europäisches Patentamt
European Patent Office
Office européen des brevets

(11) EP 0 356 379 B1

(12) EUROPÄISCHE PATENTSCHRIFT

(45) Veröffentlichungstag und Bekanntmachung des Hinweises auf die Patenterteilung:
**20.03.1996 Patentblatt 1996/12**

(51) Int Cl.$^6$: **C08K 13/02**, C08G 14/06

(21) Anmeldenummer: **89810514.3**

(22) Anmeldetag: **06.07.1989**

(54) **Zu schwerentflammbaren und hochtemperaturbeständigen Kunststoffen härtbare Harze und Verfahren zu deren Herstellung**

Resins curable into fire-retardant and heat-resistant plastic materials, and method for their preparation

Résines durcissables en vue d'obtenir des matières plastiques difficilement inflammables et résistantes à haute température et leur procédé de préparation

(84) Benannte Vertragsstaaten:
**AT BE CH DE ES FR GB GR IT LI LU NL SE**

(30) Priorität: **18.07.1988 CH 2733/88**
**27.06.1989 CH 2383/89**

(43) Veröffentlichungstag der Anmeldung:
**28.02.1990 Patentblatt 1990/09**

(73) Patentinhaber: **Gurit-Essex AG**
**CH-8807 Freienbach (CH)**

(72) Erfinder:
- **Schreiber, Herbert**
**CH-8832 Wollerau (CH)**
- **Saur, Wolfgang, Dr.**
**CH-8863 Buttikon (CH)**

(74) Vertreter: **Rottmann, Maximilian R.**
**c/o Rottmann, Zimmermann + Partner AG**
**Glattalstrasse 37**
**CH-8052 Zürich (CH)**

(56) Entgegenhaltungen:
**EP-A- 0 178 414** **GB-A- 1 437 814**

- **Römpps Chemie-Lexikon, 8. Aufl., 1979, Franckh'sche Verlagsbuchhandlung, Stuttgart, S. 153**
- **Yehaskel, A., "Fire and Flame Retardant Polymers", 1979, Noyes Data Corporation, Park Ridge, New Jersey, USA, S. 193**
- **Katz, H.S., Milewski, J.V. (Hg.), "Handbook of Fillers for Plastics", 1987, Van Nostrand Reinhold Company, New York, S. 367, 378, 379**
- **Ullmanns Encyklopädie der technischen Chemie, 4. Aufl., 1978, Verlag Chemie, Weinheim, New York, Bd. 15, S. 272**

Bemerkungen:
Die Akte enthält technische Angaben, die nach dem Eingang der Anmeldung eingereicht wurden und die nicht in dieser Patentschrift enthalten sind.

EP 0 356 379 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft:

- Harze, welche zu Kunststoffen härtbar sind, die sowohl der Brandgüteklasse V1 oder V0 nach UL 94 (Vertikaltest) entsprechen als auch bei Temperaturen bis über 280 °C beständig sind, wie sie in den Ansprüchen 1 bis 30 umschrieben sind; und
- Verfahren zu deren Herstellung, wie sie in den Ansprüchen 31 bis 34 umschrieben sind.

1-Oxa-3-aza-tetralin-Gruppen enthaltende Verbindungen und deren Vorpolymere (im folgenden kurz "Oxazen-Harze" genannt) sind z.B aus den CH-PS 574'978, 579'113 und 606'169 bekannt. Sie werden z.B. aus Phenolen durch Umsetzung mit Formaldehyd und einem Amin erhalten, etwa gemäss der Gleichung A:

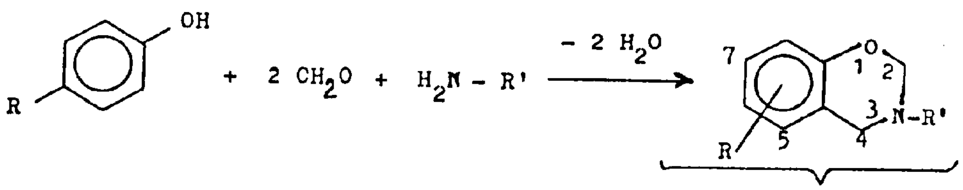


(A)

1-Oxa-3-aza-tetralin-Gruppe

R bedeutet beispielsweise Wasserstoff, Halogen, Alkyl oder Alkoxy. R' bedeutet einen aliphatischen oder aromatischen Rest.

Sie können aber auch nach anderen zu gleichartigen Produkten führenden Verfahren gewonnen werden.

Im Gegensatz zu anderen bekannten Kondensationsreaktionen von Phenolen, Aminen und Formaldehyd werden bei dieser Reaktion phenolische OH-Gruppen verbraucht. Aus der analytischen Bestimmung dieser Gruppen im Reaktionsgemisch lässt sich somit gemäss Gleichung A die Menge der synthetisierten 1-Oxa-3-aza-tetralin-Gruppen ermitteln.

Es können dabei auch Vorpolymere der 1-Oxa-3-aza-tetralin-Verbindungen eingesetzt werden. Da die 1-Oxa-3-aza-tetralin-Gruppen bei der Polymerisation wegreagieren, können diese Vorpolymeren weniger 1-Oxa-3-aza-tetralin-Gruppen enthalten. Entscheidend ist auch hier, dass das intermediär gebildete oder hypothetische monomere Reaktionsprodukt 1-Oxa-3-aza-tetralin-Gruppen enthält. Dies ist für den Fachmann aus der Funktionalität leicht zu berechnen. Eine erfindungsgemäss einsetzbare 1-Oxa-3-aza-tetralin-Verbindung oder deren Vorpolymeres bildet sich z.B. dann, wenn sich die Molverhältnisse innerhalb der in der CH-PS 606′169 definierten Grenze halten.

Als Ausgangs- bzw. Grundstoffe für die 1-Oxa-3-aza-tetralin-Verbindung dienen Phenol oder Phenol-Derivate sowie Amine und Formaldehyd.

Bevorzugt werden dabei als 1-Oxa-3-aza-tetralin-Gruppen enthaltende Verbindungen solche, die sich formell von einem Phenol und einem Amin ableiten, von denen die eine Komponente mehr als monofunktionell ist.

Beispiele geeigneter Phenole sind:

Einwertige Phenole, wie Phenol selbst, m- und p-Kresol, m- und p-Ethylphenol, m- und p-Isopropylphenol, m- und p-Isopropyloxyphenol, m- und p-Chlorphenol und beta-Naphthol. Dabei werden die meta-substituierten Phenole vorgezogen, weil bei ihnen keine reaktiven Stellen blockiert sind.

Zweiwertige Phenole, wie 4,4'-Dihydroxy-diphenylmethan, 3,3'-Dihydroxy-diphenylmethan, 2,2'-Bis-(4-hydroxyphenyl)-propan, 4,4'-Dihydroxy-stilben, Hydrochinon, Brenzkatechin und Resorcin.

Niedrig kondensierte Phenol-Formaldehyd-Novolak-Harze, gegebenenfalls auch als Mischungen mit Phenol.

Beispiele besonders geeigneter Amine sind:

Anilin, o-, m- und p-Phenylendiamin, Benzidin, 4,4'-Diaminodiphenyl-methan, 2,2'-Bis-(aminophenyl)-propan, Cyclohexylamin, Ethylendiamin und Propylendiamin.

Aus der Veröffentlichung EP-A-0 178 414 sind sodann chemisch härtbare Harze bekannt, welche Verbindungen mit mehr als einer 1-Oxa-3-aza-tetralin-Gruppe im Molekül und/oder deren Vorpolymere sowie cycloaliphatische Epoxy-Harze enthalten.

Die erwähnten Kunststoffe auf der Basis von 1-Oxa-3-azatetralin-Gruppen enthaltenden Verbindungen weisen zwar

hohe thermische Beständigkeiten von über 200 °C und bis über 300 °C auf. Auch das Brandverhalten ist, verglichen mit anderen Hochtemperaturharzen, wie z.B. EP-Harzen günstig, aber für viele Anwendungen noch unzureichend. Die Verbesserung des Brandverhaltens durch Einbau von Halogen hätte den Nachteil, dass im Brandfall hochgiftige Brandgase entstünden.

Bekannt ist der Zusatz von pulverförmigen, in den Harzen unlöslichen Flammschutzmitteln der in den Ansprüchen 1 und 15 genannten Art zur Verbesserung des Brandverhaltens von an sich brennbaren Kunststoffen, wie z.B. Expoxidharzen oder ungesättigten Polyesterharzen. Zur Erzielung selbstlöschender Eigenschaften sind hierbei jedoch so hohe Zusatzmengen erforderlich, nämlich 200 phr und mehr, dass die guten mechanischen Eigenschaften dieser Harze verlorengehen.

Wie allgemein üblich, bedeutet in der vorliegenden Beschreibung: phr = Gewichtsteile Zusatzstoff pro 100 Gewichtsteile Harzkomponente.

Zur Herstellung hochverstärkter Kunststoffe sind diese Systeme daher praktisch ungeeignet. Auch die schwer brennbaren Phenoplaste scheiden für diese Anwendungen aus, da sie schon an sich wesentlich schlechtere mechanische Eigenschaften aufweisen. Trotz der grossen toxikologischen Bedenken wurde bis heute keine befriedigende Alternative zu den halogenierten Systemen gefunden.

Aufgabe der vorliegenden Erfindung ist die Schaffung von Harzen, welche zu Kunststoffen härtbar sind, die sowohl der Brandgüteklasse V1 oder V0 nach UL 94 (Vertikaltest) entsprechen als auch bei Temperaturen bis über 280 C beständig sind.

Erfindungsgemäss wird diese Aufgabe gelöst durch Gemische, wie sie in den Ansprüchen 1 und 15 definiert sind, sowie durch die Verfahren, wie sie in den Ansprüchen 31 bis 34 definiert sind.

Es war überraschend, dass Oxazen-Harze schon mit wesentlich geringeren Zusatzmengen an Flammschutzmitteln, z.B. schon mit nur 30 phr Ammoniumpolyphosphat oder mit 50 phr Aluminiumhydroxid, selbstverlöschend sind und sich auf dieser Basis chemische beständige, unbrennbare Produkte herstellen lassen.

Weiter war überraschend, dass sich schwer entflammbere und hochtemperaturbeständige, d.h. bis über 280 °C stabile, Kunststoffe auf der Basis von thermisch härtbaren 1-Oxa-3-aza-tetralin-Gruppen enthaltenden Verbindungen herstellen lassen, wenn man diese nach den in den Ansprüchen 31 bis 34 definierten Verfahren härtet oder härtet und tempert. Dabei wird bei einer Härtung oder Härtung und Temperung bei Temperaturen über 180 °C auch die Blasenbildung verhindert.

Dies war für den Fachmann aus verschiedenen Gründen überraschend.

Bekanntlich zeigen Kunststoffe aus Epoxid-Verbindungen ein wesentlich schlechteres Brandverhalten als solche auf der Basis von Phenol-Formaldehyd-Kondensaten. Es war daher zu befürchten, dass durch den Zusatz von Epoxid-Verbindungen das günstige Brandverhalten zunichte gemacht würde. Tatsächlich wurde aber gefunden, dass dies nicht der Fall ist.

Andererseits war zu erwarten, dass sich bereits bei der Temperung über 180 °C Blasen bilden würden. Erst die Versuche zeigten, dass dies nicht der Fall ist. Calcium-Magnesium-Carbonat-Hydrat beipielsweise zersetzt sich bei 230 °C, so dass auch bei diesem Additiv mit Blasenbildung bei höheren Temperaturen zu rechnen war. Die Versuche zeigten aber, dass die Kunststoffe auf der Basis von 1-Oxa-3-aza-tetralin-Gruppen enthaltenden Verbindungen und Calcium-Magnesium-Carbonat-Hydrat mit oder ohne Epoxid-Verbindung nicht nur bei 280 °C völlig stabil blieben sondern auch über der Brandstelle kaum Blasenbildung zeigten.

Calcium-Magnesium-Carbonat-Hydrat eignet sich daher insbesondere für die Kunststoffe ohne Zusatz von Epoxid-Verbindungen.

überraschend war aber insbesondere, dass sich das gewünschte Resultat bei Oxazen-Harzen mit sehr viel weniger Flammschutzmittel als bei Epoxid-Harzen allein oder mit Oxazen-/Epoxid-Harzen erzielen lässt. So lassen sich hervorragende Resultate beispielsweise bereits mit folgenden Mengen Aluminiumhydroxid ($Al(OH)_3$) erzielen :

| | |
|---|---|
| Oxazen-Harz | 40 phr Al $(OH)_3$ |
| Oxazen-/Epoxid-Harz | 90 phr Al $(OH)_3$ |
| Epoxid-Harz | ca. 200 phr Al $(OH)_3$ |

Nach oben ist die Zusatzmenge lediglich durch die Verarbeitungstechnologie begrenzt. Für Pressmassen können z.B. bis zu 300 phr und mehr Aluminiumhydroxid eingearbeitet werden.

Die Bezeichnung "Aluminiumhydroxid" steht für die Verbindung mit der chemischen Formel $Al(OH)_3$. Diese ist nicht identisch mit den als Füllstoffen bekannten Verbindungen der Zusammensetzung AlO-OH (Aluminiumoxidmonohydrat, Bauxit u.a.).

Als Calcium-Magnesium-Carbonat-Hydrat wird hier das hydratisierte Calcium-Magnesium-Carbonat bezeichnet. Eine geeignete Verbindung weist z.B. für die Hauptkomponenten folgende Analyse auf:

38 % MgO
8 % CaO
53 % Glühverlust (= 44 % $CO_2$ + 9 % $H_2O$).

Roter Phosphor wird vorzugsweise in mikroverkapselter Form eingesetzt. Geeignete Verkapselungsmittel sind z.B. feste Epoxid-Verbindungen.

Zweckmässigerweise enthält die Harzkomponente (a) ausserdem mindestens eine härtbare Epoxid-Verbindung, vorzugsweise in einer Menge von mindestens 5 Gewichtsteilen, insbesondere 5 bis 60 Gewichtsteilen, auf 100 Gewichtsteile der 1-Oxa-3-aza-tetralin-Gruppen enthaltenden Verbindung.

Als Epoxid-Verbindungen eignen sich mono- oder mehrfunktionelle, thermisch, katalytisch oder durch Härtersubstanzen härtbare Epoxid-Verbindungen, welche üblicherweise als Epoxidharze bezeichnet werden. Geeignete Epoxid-Verbindungen sind z.B. beschrieben in:

- Sidney H. Goodman, Handbook of Thermoset Plastics, Noyes Publications, Park Ridge, NJ;
- W. G. Potter, Epoxide Resins, Ilife Books, London;
- Henry Lee und Kris Neville, Handbook of Epoxy Resins, McGraw-Hill Book Company, New York/San Francisco/Toronto/London.

Zweckmässigerweise wird Aluminiumhydroxid in einer Menge von mindestens 40 phr, Calcium-Magnesium-Carbonat-Hydrat in einer solchen von mindestens 50 phr und Ammoniumpolyphosphat in einer solchen von mindestens 20 phr eingesetzt. Diese Additive können auch in beschichteter Form, z.B. mit Stearat- oder Silan-Beschichtung eingesetzt werden.

Durch thermische Härtung der erwähnten härtbaren Harze bei Temperaturen über 100 °C, insbesondere 140 bis 220 °C, erhält man schwerentflammbare, hochtemperaturstabile und hitzestabile Kunststoffe.

Zweckmässigerweise unterwirft man die gehärteten Kunststoffe, insbesondere solche, die Aluminiumhydroxid aber keine Epoxid-Verbindungen enthalten, einer thermischen Nachbehandlung, vorzugsweise bei Temperaturen von 180 bis 220 °C. Die Dauer dieser Temperung richtet sich nach der Höhe der Temperatur. Folgende Richtwerte können als Anhaltspunkte dienen, wobei die Zeiten aber auch beliebig verlängert werden können, ohne dass die Kunststoffe geschädigt werden:

24 h bei 180 °C; oder
4 h bei 200 °C; oder
30 min bei 220 °C.

Diese Zeiten können auch beliebig anteilsmässig kombiniert werden. So hat sich z.B. folgender Temperungszyklus bewährt:

$$30\ \text{min}/200\ ^\circ\text{C} + 30\ \text{min}/220\ ^\circ\text{C} + 30\ \text{min}/230\ ^\circ\text{C} + 30\ \text{min}/250\ ^\circ\text{C}.$$

Mit Systemen, welche Melaminphosphat enthalten, lassen sich auch ohne Zusatz von Treibmitteln selbstlöschende Schaumstoffe herstellen. Auch dies war für den Fachmann sehr überraschend, da die Melaminphosphate in Abwesenheit des Harzes bis 300 °C beständig sind.

Die Eigenschaften der so hergestellten Kunststoffe können durch übliche Zusatzstoffe auf bestimmte Anwendungen zugeschnitten werden. Von Bedeutung sind insbesondere:

- Verstärkungsfasern, wie Glas-, Quarz-, Kohlenstoff-, mineralische und synthetische Fasern, und zwar in den üblichen Formel als Kurzfaser, Stapelfaser, Faden, Gewebe oder Matte;
- Weichmacher, insbesondere Phosphorverbindungen;
- Russ oder Graphit;
- Füllstoffe;
- Farbstoffe;
- Mikrohohlkugeln; und
- Metallpulver.

Für die Verarbeitung eignen sich die für wärmehärtbare Phenol-Formaldehyd-Harze oder EP-Harze bekannten Verfahren, wie z.B. Heisspressen von Prepregs, SMC (Sheet Molding Compound), oder Pressen von Pressmassen; Giessen; Faserwickelverfahren; Vakuumimprägnierung. Für die Vakuumimprägnierung kommen insbesondere feinteilige Additive mit Korngrössen unter 0,001 mm in Frage.

Ausführungsbeispiele

In den folgenden Beispielen werden folgende Ausgangsstoffe und Materialien verwendet:

1-Oxa-3-aza-tetralin-Verbindung 1:
hergestellt durch Umsetzung von 4,4'-Diamino-diphenylmethan mit Phenol und Formaldehyd im Molverhältnis 1:2:4. Strukturformel:

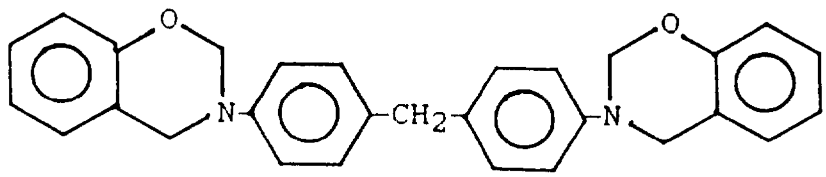

1-Oxa-3-aza-tetralin-Verbindung 2:
hergestellt aus dem Umsetzungsprodukt von 2 Mol Phenol und 1 Mol Formaldehyd durch eine zweite Umsetzung mit 2 Mol Anilin und 4 Mol Formaldehyd. Mittlere Zusammensetzung:

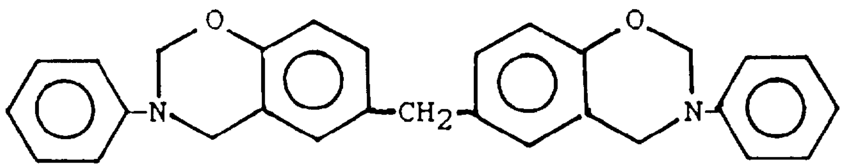

1-Oxa-3-aza-tetralin-Verbindung 3:
hergestellt durch Umsetzung von Phenol mit Anilin und Formaldehyd im Molverhältnis 1:1:2. Strukturformel:

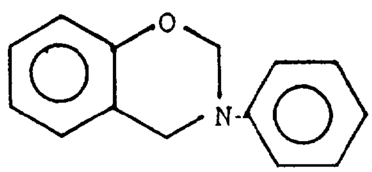

Epoxid-Verbindung 1:
Flüssiger Bisphenol-A-glycidylether, Epoxid-Äquivalentgewicht = 200 (Handelsbezeichnung "Epikote 828")
Epoxid-Verbindung 2:
3,4-Epocyclohexylmethyl-3,4-epoxy-cyclohexan-carboxylat (Handelsbezeichnung "Araldit CY 179")
Butandiol-diglycidylether:
(Handelsbezeichnung "Araldit DY 026")
Aluminiumhydroxid 1:
$Al(OH)_3$, mittlere Teilchengrösse 0,0008 mm
Aluminiumhydroxid 2:
$Al(OH)_3$, mittlere Teilchengrösse 0,020-0,025 mm
Calcium-Magnesium-Carbonat:
Hydratisiertes Calcium-Magnesium-Carbonat, 38 % Ca, 8% Mg, Glühverlust (700 °C) 53 % (44 % $CO_2$, 9 % $H_2O$), mittlere Teilchengrösse 0,00016 mm
Magnesiumhydroxid:
$Mg(OH)_2$, mittlere Teilchengrösse 0,0012 mm, Glühverlust (1000 °C) 32 %
Ammoniumpolyphosphat:
$(NH_4)_{n+2}P_nO_{3n+1}$, Phosphorgehalt 32 %, mittlere Teilchengrösse 0,03 mm
Melaminphosphat:
$C_3H_6N_6.H_3PO_4$, Teilchengrösse < 0,075 mm
Dimelaminphosphat:
$(C_3H_6N_6)_2.H_3PO_4$, Teilchengrösse < 0,075 mm
Roter Phosphor:
Amorph, Teilchengrösse 0,001-0,050 mm
Phosphorige Säure:

$H_3PO_3$, kristallin, gemahlen

Orthophosphorsäure:

$H_3PO_4$, flüssig

Borsäure:

$H_3BO_3$, kristallin, gemahlen

Glasgewebe 1:

200 g/m², Fadendichte/cm = 7x7, Aminosilan-Finish

Glasgewebe 2

110 g/m², Fadendichte/cm = 24x24, Aminosilan-Finish

Zur Herstellung der Prüfplatten wurden die Harz-Additiv-Mischungen zwischen teflonisierten Glasplatten 2 Stunden bei 200 °C gehärtet. Bei den glasgewebehaltigen Proben wurden zunächst die Glasgewebe mit der Harz-Additiv-Mischung im Vakuum bei 120 °C imprägniert und dann zwischen den Glasplatten gehärtet.

Die Brennbarkeit wurde nach der Vorschrift UL 94 Vertikaltest geprüft. Für die Beurteilung ist auch die Probendicke zu berücksichtigen, da dickere Proben leichter die Klassierungen UL 94 V erfüllen als dünnere Proben.

Zur Bestimmung der Temperaturbeständigkeit wurden die Proben 15 Stunden auf 280 °C aufgeheizt und die Volumenänderung bestimmt.

Alle Proben mit negativer Volumenänderung zeigten keine Blasenbildung oder anderweitige Beschädigungen.

Beispiele 1 bis 27

Die Ergebnisse der Prüfungen sind in den folgenden Tabellen 1 und 2 dargestellt.

| Tabelle 1 | | Vergleich | | | | Beispiel Nr. | | | | | | | | | | | | |
|---|---|---|---|---|---|---|---|---|---|---|---|---|---|---|---|---|---|---|
| | | 1 | 1a | 2 | 3 | 1 | 2 | 2a | 3 | 4 | 5 | 6 | 7 | 8 | 9 | 10 | 11 | 12 |
| Zusammensetzung (Gew.-Teile) | | | | | | | | | | | | | | | | | | |
| 1-Oxa-3-aza-tetralin-Verbindung 1 | | 30 | | 30 | 20 | 30 | 30 | | 30 | 20 | 20 | 20 | -- | -- | 20 | 24 | 30 | 20 |
| 1-Oxa-3-aza-tetralin-Verbindung 2 | | -- | | -- | -- | -- | -- | | -- | -- | -- | -- | -- | 24 | -- | -- | -- | 10 |
| 1-Oxa-3-aza-tetralin-Verbindung 3 | | -- | | -- | -- | -- | -- | | -- | -- | -- | -- | 24 | -- | -- | -- | -- | -- |
| Epoxid-Verbindung 1 | | -- | | -- | 10 | -- | -- | | -- | 10 | 10 | 10 | -- | -- | -- | -- | -- | -- |
| Epoxid-Verbindung 2 | | -- | | -- | -- | -- | -- | | -- | -- | -- | -- | 6 | 6 | 10 | 6 | -- | -- |
| Butandiol-diglycidylether | | -- | | -- | -- | -- | -- | | -- | -- | -- | -- | -- | -- | -- | -- | -- | -- |
| Aluminiumhydroxid 1 | | -- | | -- | -- | 10 | 15 | | 15 | 10 | 10 | 15 | 12 | 10 | 10 | 10 | -- | -- |
| Aluminiumhydroxid 2 | | -- | | -- | -- | -- | -- | | -- | 10 | 10 | -- | 12 | 10 | 10 | 10 | -- | -- |
| Calcium-Magnesium-Carbonat | | -- | | -- | -- | -- | -- | | -- | -- | -- | -- | -- | -- | -- | -- | 15 | 30 |
| Magnesiumhydroxid | | -- | | -- | -- | -- | -- | | -- | -- | -- | -- | -- | -- | -- | -- | -- | -- |
| Ammoniumpolyphosphat | | -- | | -- | -- | -- | -- | | -- | -- | -- | -- | -- | -- | -- | -- | -- | -- |
| Melaminphosphat | | -- | | -- | -- | -- | -- | | -- | -- | -- | -- | -- | -- | -- | -- | -- | -- |
| Dimelaminphosphat | | -- | | -- | -- | -- | -- | | -- | -- | -- | -- | -- | -- | -- | -- | -- | -- |
| Roter Phosphor | | -- | | -- | -- | -- | -- | | -- | -- | -- | -- | -- | -- | -- | -- | -- | -- |
| Phosphorige Säure | | -- | | -- | -- | -- | -- | | -- | -- | -- | -- | -- | -- | -- | -- | -- | -- |
| Orthophosphorsäure | | -- | | -- | -- | -- | -- | | -- | -- | -- | -- | -- | -- | -- | -- | -- | -- |
| Borsäure | | -- | | -- | -- | -- | -- | | -- | -- | -- | -- | -- | -- | -- | -- | -- | -- |
| Glasgewebe 1 (Lagen/mm) | | -- | | -- | -- | -- | -- | | -- | -- | 3,3 | -- | -- | -- | -- | 3,3 | -- | -- |
| Glasgewebe 2 (Lagen/mm) | | -- | | 10 | -- | 10 | -- | | 10 | -- | -- | 10 | -- | -- | -- | -- | -- | -- |
| Tests (Einheit) | | | | | | | | | | | | | | | | | | |
| UL 94 Vertikaltest: | | | | | | | | | | | | | | | | | | |
| - Dicke | (mm) | 4 | 1,0 | 1,0 | 1,0 | 0,9 | 1,8 | | 1,2 | 1,0 | 1,2 | 0,9 | 1,0 | 1,2 | 1,0 | -- | 1,0 | 1,0 |
| - Gesamtbrenndauer | (s) | -- | -- | -- | -- | 80 | 5 | | 20 | 20 | 17 | 185 | 18 | 25 | 5 | -- | 10 | 80 |
| - Längste Brenndauer | (s) | -- | -- | -- | -- | 14 | 1 | | 3 | 3 | 3 | 19 | 7 | 7 | 3 | -- | 1 | 9 |
| - Brennt bis oben | | - | + | + | + | - | - | | - | - | - | - | - | - | - | - | - | - |
| - Klasse UL 94 | | V1 | -- | -- | -- | V1 | V0 | | V0 | V0 | V0 | V1 | V0 | V0 | V0 | -- | V0 | V1 |
| Glasumwandlungstemperatur 1) | (°C) | -- | | -- | -- | -- | -- | | -- | -- | -- | -- | -- | -- | -- | -- | -- | -- |
| - nach Temperung 4 h/220 °C | (°C) | -- | | -- | -- | -- | -- | | -- | -- | -- | -- | -- | -- | -- | -- | -- | -- |
| Biegefestigkeit | ($N/mm^2$) | -- | | -- | -- | -- | -- | | -- | -- | -- | -- | -- | -- | -- | -- | -- | -- |
| Anmerkungen | | -- | -- | -- | -- | 2) | 2) | 3) | 2) | -- | -- | -- | -- | -- | -- | -- | -- | -- |
| Volumenänderung 15 h/280 °C | (%) | -- | -- | -- | -- | -- | 80 | 0 | -- | -8 | -4 | -4 | -- | -- | -- | -- | -2,5 | -9 |

1) Thermomechanische Analyse

2) Über der Brandzone aufgebläht

3) Temperung: 30 min/200 °C + 30 min/220 °C + 30 min/230 °C; keine Blasenbildung nach 15 h/280 °C

| Tabelle 2 | | Beispiel Nr. | | | | | | | | | | | | | | |
|---|---|---|---|---|---|---|---|---|---|---|---|---|---|---|---|---|
| | | 13 | 14 | 15 | 16 | 17 | 18 | 19 | 20 | 21 | 22 | 23 | 24 | 25 | 26 | 27 |
| Zusammensetzung (Gew.-Teile) | | | | | | | | | | | | | | | | |
| 1-Oxa-3-aza-tetralin-Verbindung 1 | | -- | -- | -- | -- | -- | -- | -- | -- | -- | -- | -- | -- | -- | -- | -- |
| 1-Oxa-3-aza-tetralin-Verbindung 2 | | -- | -- | -- | -- | 30 | 21 | 21 | 30 | 30 | 50 | 50 | 50 | 40 | -- | -- |
| 1-Oxa-3-aza-tetralin-Verbindung 3 | | 30 | 24 | 24 | 21 | -- | -- | -- | -- | -- | -- | -- | -- | -- | 28 | 28 |
| Epoxid-Verbindung 1 | | -- | 6 | 6 | 9 | -- | 9 | 9 | -- | -- | -- | -- | -- | -- | -- | -- |
| Epoxid-Verbindung 2 | | -- | -- | -- | -- | -- | -- | -- | -- | -- | -- | -- | -- | -- | -- | -- |
| Butandiol-diglycidylether | | -- | -- | -- | -- | -- | -- | -- | -- | -- | -- | -- | -- | -- | 12 | 12 |
| Aluminiumhydroxid 1 | | 24 | 10 | 12 | 12 | 15 | 10 | 12 | -- | -- | -- | -- | -- | -- | -- | -- |
| Aluminiumhydroxid 2 | | -- | 20 | 24 | 24 | -- | 20 | 24 | -- | -- | -- | -- | -- | -- | -- | -- |
| Calcium-Magnesium-Carbonat | | -- | -- | -- | -- | -- | -- | -- | -- | -- | -- | -- | -- | -- | -- | -- |
| Magnesiumhydroxid | | -- | -- | -- | -- | -- | -- | -- | 30 | -- | -- | -- | -- | -- | -- | -- |
| Ammoniumpolyphosphat | | -- | -- | -- | -- | -- | -- | -- | -- | 9 | -- | -- | -- | -- | -- | -- |
| Melaminphosphat | | -- | -- | -- | -- | -- | -- | -- | -- | -- | 25 | -- | -- | -- | -- | -- |
| Dimelaminphosphat | | -- | -- | -- | -- | -- | -- | -- | -- | -- | -- | 25 | -- | -- | -- | -- |
| Roter Phosphor | | -- | -- | -- | -- | -- | -- | -- | -- | -- | -- | -- | 1 | -- | -- | -- |
| Phosphorige Säure | | -- | -- | -- | -- | -- | -- | -- | -- | -- | -- | -- | -- | 10 | -- | -- |
| Orthophosphorsäure | | -- | -- | -- | -- | -- | -- | -- | -- | -- | -- | -- | -- | -- | 10 | -- |
| Borsäure | | -- | -- | -- | -- | -- | -- | -- | -- | -- | -- | -- | -- | -- | -- | 10 |
| Glasgewebe 1 (Lagen/mm) | | -- | -- | -- | -- | -- | -- | -- | -- | -- | -- | -- | -- | -- | -- | -- |
| Glasgewebe 2 (Lagen/mm) | | -- | -- | -- | -- | -- | -- | -- | -- | -- | -- | -- | -- | -- | -- | -- |
| Tests (Einheit) | | | | | | | | | | | | | | | | |
| UL 94 Vertikaltest: | | | | | | | | | | | | | | | | |
| - Dicke | (mm) | 1,0 | 1,0 | 1,0 | 1,0 | 0,8 | 1,0 | 1,0 | 0,9 | 0,8 | 1,0 | 2 | 2 | 3 | 3 | 3 |
| - Gesamtbrenndauer | (s) | 24 | 66 | 24 | 90 | 13 | 54 | 20 | 15 | 16 | 15 | 35 | 0 | 0 | 3 | 5 |
| - Längste Brenndauer | (s) | 5 | 21 | 9 | 24 | 3 | 21 | 4 | 2 | 4 | 3 | 10 | 0 | 0 | 8 | 10 |
| - Brennt bis oben | | | | | | | | | | | | | | | | |
| - Klasse UL 94 | | V0 | V1 | V0 | V1 | V0 | V1 | V0 | V0 | V0 | V0 | V0 | V0 | V0 | V0 | V0 |
| Glasumwandlungstemperatur 1) | (°C) | 103 | 108 | -- | -- | 153 | -- | 121 | -- | -- | -- | -- | -- | -- | -- | -- |
| - nach Temperung 4 h/220 °C | (°C) | -- | -- | -- | -- | 162 | -- | 158 | -- | -- | -- | -- | -- | -- | -- | -- |
| Biegefestigkeit | ($N/mm^2$) | -- | -- | -- | -- | 140 | -- | 100 | -- | -- | -- | -- | -- | -- | -- | -- |
| Anmerkungen | | -- | -- | -- | -- | -- | -- | -- | -- | -- | 4) | 4) | -- | 4) | 4) | 4) |
| Volumenänderung 15 h/280 °C | (%) | -- | -- | -- | -- | -- | -- | -- | -- | -- | -- | -- | -- | -- | -- | -- |

1) Thermomechanische Analyse    4) Nach Härtung aufgeschäumt

Beispiel 28

Aus 330 g 1-Oxa-3-aza-tetralin-Verbindung 1, 170 g Epoxid-Verbindung 2, 200 g Toluol, 390 g Aluminiumhydroxid 2 und 210 g Aluminiumhydroxid 1 wird eine Imprägnierlösung hergestellt. Mit der Lösung wird das Glasgewebe 2 lackiert und im Heissluftkanal getrocknet. 10 Lagen dieses Prepregs werden bei 160 °C zu einem 1 mm dicken Laminat verpresst und 1 h bei 220 °C gehärtet.

Das Laminat hat die folgenden Eigenschaften:

| | | |
|---|---|---|
| Klassierung | | UL 94-V0 |
| Biegefestigkeit: | | |
| - Kettrichtung | 440 | $N/mm^2$ |
| - Schussrichtung | 385 | $N/mm^2$ |
| E-Modul | 20000 | $N/mm^2$ |
| Spezifischer Durchgangswiderstand: | | |
| bei Raumtemperatur | $10^{16}$ | Ohm.cm |
| bei 200 °C | $4 \cdot 10^{11}$ | Ohm.cm |
| bei 250 °C | $5 \cdot 10^{09}$ | Ohm.cm |

Fortsetzung der Tabelle auf der nächsten Seite

(fortgesetzt)

| | | |
|---|---|---|
| Spezifischer Durchgangswiderstand: | | |
| nach Feuchtlagerung (95 % rel. F.) | $6 \cdot 10^{13}$ | Ohm.cm |
| Oberflächenwiderstand: | | |
| bei Raumtemperatur | $>10^{15}$ | Ohm |
| bei 200 °C | $5 \cdot 10^{11}$ | Ohm |
| bei 150 °C | $4 \cdot 10^{10}$ | Ohm |
| nach Feuchtlagerung (95 % rel. F.) | $>10^{15}$ | Ohm |
| Dielektrizitätskonstante (1 MHz) | 5,5 | |
| Verlustfaktor (1 MHz) | 0,02 | |

Beispiel 29

In analoger Weise wie in Beispiel 28 wird aus 500 g 1-Oxa-3-aza-tetralin-Verbindung 2 und 300 g Aluminiumhydroxid 1 ein 1 mm dickes Laminat hergestellt. Härtung: 1 h bei 180 °C.

Das Laminat hat die folgenden Eigenschaften:

| | | |
|---|---|---|
| Klassierung | | UL 94-V0 |
| Biegefestigkeit | 440 | $N/mm^2$ |
| E-Modul | 22000 | $N/mm^2$ |

**Patentansprüche**

1. Harz, welches zu Kunststoffen härtbar ist, die sowohl der Brandgüteklasse V1 oder V0 nach UL 94 (Vertikaltest) entsprechen als auch bei Temperaturen bis über 280 C beständig sind, bestehend aus einem Gemisch aus:

   (a) einer Harzkomponente, welche mindestens eine thermisch härtbare 1-Oxa-3-aza-tetralin-Gruppen enthaltende Verbindung enthält oder aus einer solchen besteht; und

   (b) einer zweiten Komponente, welche wenigstens ein Flammschutzmittel aus der folgenden Gruppe enthält oder aus einem solchen besteht:

   - Aluminiumhydroxid;
   - hydratisiertes Calcium-Magnesium-Carbonat;
   - Magnesiumhydroxid;
   - elementarer roten Phosphor;
   - Sauerstoffsäuren des Phosphors;
   - anorganische Salze von Sauerstoffsäuren des Phosphors;
   - organische Salze von Sauerstoffsäuren des Phosphors;
   - Polyphoshate;
   - Borsäure; und
   - Salze der Borsäure.

2. Harz nach Anspruch 1, dadurch gekennzeichnet, dass es als zweite Komponente (b) mindestens 50 Gewichtsteile Magnesiumhydroxid auf 100 Gewichtsteile der Harzkomponente (a) enthält.

3. Harz nach Anspruch 1, dadurch gekennzeichnet, dass es als zweite Komponente (b) ein Ammoniumpolyphosphat enthält.

4. Harz nach Anspruch 3, dadurch gekennzeichnet, dass es als zweite Komponente (b) ein Ammoniumpolyphosphat der Formel $(NH_4PO_3)_n$ enthält.

5. Harz nach Anspruch 3, dadurch gekennzeichnet, dass es als zweite Komponente (b) ein Ammoniumpolyphosphat der Formel $(NH_4)_{n+2}P_nO_{3n+1}$ enthält.

**6.** Harz nach Anspruch 3, dadurch gekennzeichnet, dass es als zweite Komponente (b) mindestens 20 Gewichtsteile Ammoniumpolyphosphat auf 100 Gewichtsteile der Harzkomponente (a) enthält.

**7.** Harz nach Anspruch 1, dadurch gekennzeichnet, dass es als zweite Komponente (b) ein Melaminphosphat enthält.

**8.** Harz nach Anspruch 7, dadurch gekennzeichnet, dass es als zweite Komponente (b) ein Monomelaminphosphat der Formel $C_3H_6N_6H_3PO_4$ enthält.

**9.** Harz nach Anspruch 7, dadurch gekennzeichnet, dass es als zweite Komponente (b) ein Dimelaminphosphat der Formel $(C_3H_6N_6)_2H_3PO_4$ enthält.

**10.** Harz nach Anspruch 7, dadurch gekennzeichnet, dass es als zweite Komponente (b) mindestens 20 Gewichtsteile Melaminphosphat auf 100 Gewichtsteile der Harzkomponente (a) enthält.

**11.** Harz nach Anspruch 1, dadurch gekennzeichnet, dass es als zweite Komponente (b) Borsäure oder Zinkborat enthält.

**12.** Harz nach Anspruch 1, dadurch gekennzeichnet, dass es als zweite Komponente (b) mindestens 40 Gewichtsteile Aluminiumhydroxid auf 100 Gewichtsteile der Harzkomponente (a) enthält.

**13.** Harz nach Anspruch 1, dadurch gekennzeichnet, dass es als zweite Komponente (b) mindestens 50 Gewichtsteile hydratisiertes Calcium-Magnesium-Carbonat auf 100 Gewichtsteile der Harzkomponente (a) enthält.

**14.** Harz nach Anspruch 1, dadurch gekennzeichnet, dass sich die 1-Oxa-3-aza-tetralin-Gruppen enthaltende Verbindung formell von einem Phenol und einem Amin ableitet, von denen die eine Komponente mehr als monofunktionell ist.

**15.** Harz, welches zu Kunststoffen härtbar ist, die sowohl der Brandgüteklasse V1 oder V0 nach UL 94 (Vertikaltest) entsprechen als auch bei Temperaturen bis über 280°C beständig sind, bestehend aus einem Gemisch aus:

(a) einer Harzkomponente, welche mindestens eine thermisch härtbare 1-Oxa-3-aza-tetralin-Gruppen enthaltende Verbindung und eine härtbare Epoxyverbindung enthält oder aus einer solchen Mischung besteht; und

(b) einer zweiten Komponente, welche wenigstens ein Flammschutzmittel aus der folgenden Gruppe enthält oder aus einem solchen besteht:

- Aluminiumhydroxid;
- hydratisiertes Calcium-Magnesium-Carbonat;
- Magnesiumhydroxid;
- elementarer roter Phosphor;
- Sauerstoffsäuren des Phosphors;
- anorganische Salze von Sauerstoffsäuren des Phosphors;
- organische Salze von Sauerstoffsäuren des Phosphors;
- Polyphoshate;
- Borsäure; und
- Salze der Borsäure.

**16.** Harz nach Anspruch 15, dadurch gekennzeichnet, dass es als zweite Komponente (b) mindestens 50 Gewichtsteile Magnesiumhydroxid auf 100 Gewichtsteile der Harzkomponente (a) enthält.

**17.** Harz nach Anspruch 15, dadurch gekennzeichnet, dass es als zweite Komponente (b) ein Ammoniumpolyphosphat enthält.

**18.** Harz nach Anspruch 17, dadurch gekennzeichnet, dass es als zweite Komponente (b) ein Ammoniumpolyphosphat der Formel $(NH_4PO_3)_n$ enthält.

**19.** Harz nach Anspruch 17, dadurch gekennzeichnet, dass es als zweite Komponente (b) ein Ammoniumpolyphosphat der Formel $(NH_4)_n{+}_2P_nO_{3n+1}$ enthält.

**20.** Harz nach Anspruch 17, dadurch gekennzeichnet, dass es als zweite Komponente (b) mindestens 20 Gewichtsteile Ammoniumpolyphosphat auf 100 Gewichtsteile der Harzkomponente (a) enthält.

**21.** Harz nach Anspruch 15, dadurch gekennzeichnet, dass es als zweite Komponente (b) ein Melaminphosphat enthält.

**22.** Harz nach Anspruch 21, dadurch gekennzeichnet, dass es als zweite Komponente (b) ein Monomelaminphosphat der Formel $C_3H_6N_6H_3PO_4$ enthält.

**23.** Harz nach Anspruch 21, dadurch gekennzeichnet, dass es als zweite Komponente (b) ein Dimelaminphosphat der Formel $(C_3H_6N_6)_2H_3PO_4$ enthält.

**24.** Harz nach Anspruch 21, dadurch gekennzeichnet, dass es als zweite Komponente (b) mindestens 20 Gewichtsteile Melaminphosphat auf 100 Gewichtsteile der Harzkomponente (a) enthält.

**25.** Harz nach Anspruch 15, dadurch gekennzeichnet, dass es als zweite Komponente (b) Borsäure oder Zinkborat enthält.

**26.** Harz nach Anspruch 15, dadurch gekennzeichnet, dass es als zweite Komponente (b) mindestens 40 Gewichtsteile Aluminiumhydroxid auf 100 Gewichtsteile der Harzkomponente (a) enthält.

**27.** Harz nach Anspruch 15, dadurch gekennzeichnet, dass es als zweite Komponente (b) mindestens 50 Gewichtsteile hydratisiertes Calcium-Magnesium-Carbonat auf 100 Gewichtsteile der Harzkomponente (a) enthält.

**28.** Harz nach Anspruch 15, dadurch gekennzeichnet, dass sich die 1-Oxa-3-aza-tetralin-Gruppen enthaltende Verbindung formell von einem Phenol und einem Amin ableitet, von denen die eine Komponente mehr als monofunktionell ist.

**29.** Harz nach Anspruch 15, dadurch gekennzeichnet, dass die Komponente (a) mindestens 5 Gewichtsteile Epoxyverbindung auf 100 Gewichtsteile der 1-Oxa-3-aza-tetralin-Gruppen enthaltenden Verbindung enthält.

**30.** Harz nach Anspruch 29, dadurch gekennzeichnet, dass die Komponente (a) 5 bis 60 Gewichtsteile Epoxyverbindung auf 100 Gewichtsteile der 1-Oxa-3-aza-tetralin-Gruppen enthaltenden Verbindung enthält.

**31.** Verfahren zur Herstellung von schwerentflammbaren und hochtemperaturbeständigen Kunststoffen, dadurch gekennzeichnet, dass man ein Harz nach Anspruch 1 härtet oder härtet und danach tempert.

**32.** Verfahren nach Anspruch 31, dadurch gekennzeichnet, dass man ein Aluminiumhydroxid enthaltendes Harz nach der Härtung bei einer Temperatur von 180 bis 250 °C tempert.

**33.** Verfahren zur Herstellung von schwerentflammbaren und hochtemperaturbeständigen Kunststoffen, dadurch gekennzeichnet, dass man ein Harz nach Anspruch 15 härtet oder härtet und danach tempert.

**34.** Verfahren nach Anspruch 33, dadurch gekennzeichnet, dass man ein Aluminiumhydroxid enthaltendes Harz nach der Härtung bei einer Temperatur 180 bis 250 °C tempert.

**Claims**

**1.** Resin which can be hardened into plastics which meet the Fire Quality Class V1 or V0 according to UL 94 (vertical test) and are also resistant to temperatures up to above 280° C, consisting of a mixture of:

(a) a resin component which contains at least one thermosetting compound which contains 1-oxa-3-aza-tetralin groups or consists of one such compound; and

(b) a second component which contains at least one flameproofing agent from the following group or consists of one of these;

- aluminium hydroxide;

- hydrated calcium-magnesium-carbonate;
- magnesium hydroxide;
- elemental red phosphorus;
- oxo acids of phosphorus;
- inorganic salts of oxo acids of phosphorus;
- organic salts of oxo acids of phosphorus;
- polyphosphates;
- boric acid; and
- salts of boric acid.

**2.** Resin according to Claim 1, characterized in that, as second component (b), it contains at least 50 parts by weight magnesium hydroxide per 100 parts of the resin component (a).

**3.** Resin according to Claim 1, characterized in that it contains an ammonium polyphosphate as second component (b).

**4.** Resin according to Claim 3, characterized in that it contains as second component (b) an ammonium polyphosphate of the formula $(NH_4PO_3)_n$.

**5.** Resin according to Claim 3, characterized in that it contains as second component (b) an ammonium polyphosphate of the formula $(NH_4)_{n+2}P_nO_{3n+1}$.

**6.** Resin according to Claim 3, characterized in that it contains as second component (b) at least 20 parts by weight ammonium polyphosphate per 100 parts by weight of the resin component (a).

**7.** Resin according to Claim 1, characterized in that it contains a melamine phosphate as second component (b).

**8.** Resin according to Claim 7, characterized in that it contains a monomelamine phosphate of the formula $C_3H_6N_6H_3PO_4$ as second component (b).

**9.** Resin according to Claim 7, characterized in that it contains a dimelamine phosphate of the formula $(C_3H_6N_6)_2H_3PO_4$ as second component (b).

**10.** Resin according to Claim 7, characterized in that it contains at least 20 parts by weight melamine phosphate as second component (b) per 100 parts of the resin component (a).

**11.** Resin according to Claim 1, characterized in that it contains boric acid or zinc borate as second component (b).

**12.** Resin according to Claim 1, characterized in that it contains at least 40 parts by weight aluminium hydroxide as second component (b) per 100 parts by weight of the resin component (a).

**13.** Resin according to Claim 1, characterized in that it contains at least 50 parts by weight hydrated calcium-magnesium-carbonate as second component (b) per 100 parts by weight of the resin component (a).

**14.** Resin according to Claim 1, characterized in that the compound containing 1-oxa-3-aza-tetralin groups is formally derived from a phenol and an amine, of which the one component is more than monofunctional.

**15.** Resin which can be hardened into plastics which meet the fire quality class V1 or V0 according to UL 94 (vertical test) and are also resistant to temperatures up to above 280 °C, consisting of a mixture of:

(a) a resin component which contains at least one thermosetting compound containing 1-oxa-3-aza-tetraline groups; and an epoxy compound which can be hardened; or consists of such a mixture; and

(b) a second component which contains at least one flameproofing agent from the following group, or consists of one of these:

- aluminium hydroxide;
- hydrated calcium-magnesium-carbonate;
- magnesium hydroxide;

- elemental red phosphorus;
- oxo acids of phosphorus;
- inorganic salts of oxo acids of phosphorus;
- organic salts of oxo acids of phosphorus;
- polyphosphates;
- boric acid; and
- salts of boric acid.

**16.** Resin according to Claim 15, characterized in that it contains as second component (b) at least 50 parts by weight of magnesium hydroxide per 100 parts by weight of resin component (a).

**17.** Resin according to Claim 15, characterized in that it contains as second component (b) an ammonium polyphosphate as second component (b).

**18.** Resin according to Claim 17, characterized in that it contains as second component (b) an ammonium polyphosphate of the formula $(NH_4PO_3)_n$.

**19.** Resin according to Claim 17, characterized in that it contains as second component (b) an ammonium polyphosphate of the formula $(NH_4)_n+_2P_nO_{3n+1}$.

**20.** Resin according to Claim 17, characterized in that it contains as second component (b) at least 20 parts by weight ammonium polyphosphate per 100 parts by weight of the resin component (a).

**21.** Resin according to Claim 15, characterized in that it contains as second component (b) a melamine phosphate.

**22.** Resin according to Claim 21, characterized in that it contains as second component (b) a melamine phosphate of the formula $C_3H_6N_6H_3PO_4$.

**23.** Resin according to Claim 21, characterized in that it contains as second component (b) a dimelamine phosphate of the formula $(C_3H_6N_6)_2H_3PO_4$.

**24.** Resin according to Claim 21, characterized in that it contains as second component (b) at least 20 parts by weight melamine phosphate per 100 parts by weight of the resin component (a).

**25.** Resin according to Claim 15, characterized in that it contains as second component (b) boric acid or zinc borate.

**26.** Resin according to Claim 15, characterized in that it contains as second component (b) at least 40 parts by weight aluminium hydroxide per 100 parts by weight of the resin component (a).

**27.** Resin according to Claim 15, characterized in that it contains as second component (b) at least 50 parts by weight hydrated calcium-magnesium-carbonate per 100 parts by weight of the resin component (a).

**28.** Resin according to Claim 15, characterized in that the compound containing 1-oxa-3-aza-tetralin groups is formally derived from a phenol and an amine, of which the one component is more than monofunctional.

**29.** Resin according to Claim 15, characterized in that the component (a) contains at least 5 parts by weight epoxy compound per 100 parts by weight of the compound containing 1-oxa-3-aza-tetralin groups.

**30.** Resin according to Claim 29, characterized in that the component (a) contains 5 to 60 parts by weight of epoxy compound per 100 parts by weight of the compound containing 1-oxa-3-aza-tetralin groups.

**31.** Method for the production of flame-resistant and high-temperature-resistant plastics, characterized in that a resin according to Claim 1 is hardened or hardened and thereafter tempered.

**32.** Method according to Claim 31, characterized in that a resin containing aluminium hydroxide is tempered after the hardening at a temperature of 180 to 250 °C.

**33.** Method for the production of flame-resistant and high-temperature-resistant plastics, characterized in that a resin

according to Claim 15 is hardened or hardened and thereafter tempered.

**34.** Method according to Claim 33, characterized in that a resin containing aluminium hydroxide is tempered after hardening at a temperature of 180 to 250 °C.

**Revendications**

**1.** Résine durcissable en matières synthétiques correspondant à la classe de matières inflammables V1 ou V0 selon UL 94 (Test vertical) et résistant même à des températures dépassant 280°C, qui se compose d'un mélange de:

(a) un composant résine qui contient ou est constitué par au moins un composé contenant des groupes 1-oxa-3-aza-tétraline durcissable à la chaleur; et
(b) un second composant qui contient ou est constitué par au moins un produit ignifuge du groupe suivant:

- hydroxyde d'aluminium;
- carbonate de calcium-magnésium hydraté;
- hydroxyde de magnésium;
- phosphore rouge élémentaire;
- oxo-acides de phosphore;
- sels inorganiques d'oxo-acides de phosphore;
- sels organiques d'oxo-acides de phosphore;
- polyphosphates;
- acide borique; et
- sels de l'acide borique.

**2.** Résine selon la revendication 1, caractérisée en ce qu'elle contient comme second composant (b) au moins 50 parties en poids d'hydroxyde de magnésium pour 100 parties en poids du composant résine (a).

**3.** Résine selon la revendication 1, caractérisée en ce qu'elle contient comme second composant (b) un polyphosphate d'ammonium.

**4.** Résine selon la revendication 3, caractérisée en ce qu'elle contient comme second composant (b) un polyphosphate d'ammonium de formule $(NH_4PO_3)_n$.

**5.** Résine selon la revendication 3, caractérisée en ce qu'elle contient comme second composant (b) un polyphosphate d'ammonium de formule $(NH_4)_{n+2}P_nO_{3n+1}$.

**6.** Résine selon la revendication 3, caractérisée en ce qu'elle contient comme second composant (b) au moins 20 parties en poids de polyphosphate d'ammonium pour 100 parties en poids de composant résine (a).

**7.** Résine selon la revendication 1, caractérisée en ce qu'elle contient comme second composant (b) un phosphate de mélamine.

**8.** Résine selon la revendication 7, caractérisée en ce qu'elle contient comme second composant (b) un phosphate de monomélamine de formule $C_3H_6N_6H_3PO_4$.

**9.** Résine selon la revendication 7, caractérisée en ce qu'elle contient comme second composant (b) un phosphate de dimélamine de formule $(C_3H_6N_6)_2H_3PO_4$.

**10.** Résine selon la revendication 7, caractérisée en ce qu'elle contient comme second composant (b) au moins 20 parties en poids de phosphate de mélamine pour 100 parties en poids du composant résine (a).

**11.** Résine selon la revendication 1, caractérisée en ce qu'elle contient comme second composant (b) de l'acide borique ou du borate de zinc.

**12.** Résine selon la revendication 1, caractérisée en ce qu'elle contient comme second composant (b) au moins 40 parties en poids d'hydroxyde d'aluminium pour 100 parties en poids du composant résine (a).

**13.** Résine selon la revendication 1, caractérisée en ce qu'elle contient comme second composant (b) au moins 50 parties en poids de carbonate de calcium-magnésium hydraté pour 100 parties en poids du composant résine (a).

**14.** Résine selon la revendication 1, caractérisée en ce que le composé contenant les groupes 1-oxa-3-aza-tétraline dérive formellement d'un phénol et d'une amine, un des composants étant plus que monofonctionnel.

**15.** Résine durcissable en matières synthétiques correspondant à la classe de matières inflammables V1 ou V0 selon UL 94 (Test vertical) et résistant même à des températures dépassant 280°C, qui se compose d'un mélange de:

(a) un composant résine qui contient au moins un composé contenant des groupes 1-oxa-3-aza-tétralène durcissable à la chaleur ainsi qu'un composé époxyde durcissable, ou qui se compose d'un tel mélange; et
(b) un second composant qui contient ou est constitué par au moins un produit ignifuge du groupe suivant:

- hydroxyde d'aluminium;
- carbonate de calcium-magnésium hydraté;
- hydroxyde de magnésium;
- phosphore rouge élémentaire;
- oxo-acides de phosphore;
- sels inorganiques d'oxo-acides de phosphore;
- sels organiques d'oxo-acides de phosphore;
- polyphosphates;
- acide borique; et
- sels de l'acide borique.

**16.** Résine selon la revendication 15, caractérisée en ce qu'elle contient comme second composant (b) au moins 50 parties en poids d'hydroxyde de magnésium pour 100 parties en poids du composant résine (a).

**17.** Résine selon la revendication 15, caractérisée en ce qu'elle contient comme second composant (b) un polyphosphate d'ammonium.

**18.** Résine selon la revendication 17, caractérisée en ce qu'elle contient comme second composant (b) un polyphosphate d'ammonium de formule $(NH_4PO_3)_n$.

**19.** Résine selon la revendication 17, caractérisée en ce qu'elle contient comme second composant (b) un polyphosphate d'ammonium de formule $(NH_4)_{n+2}P_nO_{3n+1}$.

**20.** Résine selon la revendication 17, caractérisée en ce qu'elle contient comme second composant (b) au moins 20 parties en poids de polyphosphate d'ammonium pour 100 parties en poids du composant résine (a).

**21.** Résine selon la revendication 15, caractérisée en ce qu'elle contient comme second composant (b) un phosphate de mélamine.

**22.** Résine selon la revendication 21, caractérisée en ce qu'elle contient comme second composant (b) un phosphate de monomélamine de formule $C_3H_6N_6H_6PO_4$.

**23.** Résine selon la revendication 21, caractérisée en ce qu'elle contient comme second composant (b) un phosphate de dimélamine de formule $(C_3H_6N_6)_2H_3PO_4$.

**24.** Résine selon la revendication 21, caractérisée en ce qu'elle contient comme second composant (b) au moins 20 parties en poids de phosphate de mélamine pour 100 parties en poids de composant résine (a).

**25.** Résine selon la revendication 15, caractérisée en ce qu'elle contient comme second composant (b) de l'acide borique ou du borate de zinc.

**26.** Résine selon la revendication 15, caractérisée en ce qu'elle contient comme second composant (b) au moins 40 parties en poids d'hydroxyde d'aluminium pour 100 parties en poids de composant résine (a).

**27.** Résine selon la revendication 15, caractérisée en ce qu'elle contient comme second composant (b) au moins 50

parties en poids de carbonate de calcium-magnésium hydraté pour 100 parties en poids de composant résine (a).

**28.** Résine selon la revendication 15, caractérisée en ce que le composé contenant les groupes 1-oxa-3-aza-tétraline dérive formellement d'un phénol et d'une amine, un des composants étant plus que monofonctionnel.

**29.** Résine selon la revendication 15, caractérisée en ce que le composant (a) contient au moins 5 parties en poids de composé époxyde pour 100 parties en poids de composé contenant les groupes 1-oxa-3-aza-tétraline.

**30.** Résine selon la revendication 29, caractérisée en ce que le composant (a) contient de 5 à 60 parties en poids de composé époxyde pour 100 parties en poids du composé contenant les groupes 1-oxa-3-aza-tétraline.

**31.** Procédé de préparation de matières synthétiques difficilement inflammables et très stables et très résistantes aux hautes températures, caractérisé en ce qu'on durcit une résine selon la revendication 1 ou en ce qu'on la durcit puis en ce qu'on la met en équilibre de température.

**32.** Procédé selon la revendication 31, caractérisé en ce qu'on met en équilibre de température à une température de 180 à 250°C une résine contenant de l'hydroxyde d'aluminium après durcissement.

**33.** Procédé de préparation de matières synthétiques difficilement inflammables et très résistantes aux hautes températures, caractérisé en ce qu'on durcit une résine selon la revendication 15 ou en ce qu'on la durcit puis en ce qu'on la met en équilibre de température.

**34.** Procédé selon la revendication 33, caractérisé en ce qu'on met en équilibre de température à une température de 180 à 250°C une résine contenant de l'hydroxyde d'aluminium après durcissement.